# EUROPEAN PATENT APPLICATION

(11) **EP 3 159 829 A1**
(43) Date of publication of application: **26.04.2017**
(21) Application number: 15306690.7
(22) Date of filing: 21.10.2015
(51) Int. Cl.: G06K 9/32, G06T 7/00, G06K 9/00

(54) **METHODS OF DETECTING AND MANAGING A FIDUCIAL MARKER DISPLAYED ON A DISPLAY DEVICE**

(71) Applicant: Thomson Licensing, 92130 Issy-les-Moulineaux (FR)
(72) Inventor: HUBERT, ERIC, 35576 CESSON SEVIGNE CEDEX (FR); HIRTZLIN, PATRICE, 35576 CESSON SEVIGNE CEDEX (FR); MARVIE, JEAN-EUDES, 35576 CESSON SEVIGNE CEDEX (FR)
(74) Representative: Huchet, Anne

(57) **Abstract**

There is proposed a method of detecting a fiducial marker displayed on a display device (2) in a real world, wherein a portable device (1), comprising a camera and a marker detector unit, performs: obtaining current attribute information representative of a current value of at least one modifiable attribute associated with the displayed fiducial marker (5); detecting the displayed fiducial marker in an image displayed on the display device, according to the current attribute information; computing pose information representative of a pose of the portable device with regard to the displayed fiducial marker in the real world, according to the current attribute information and the detected displayed fiducial marker; and obtaining first new attribute information representative of a first new value of the at least one modifiable attribute, the first new value depending on the computed pose information.

## Description

### TECHNICAL FIELD

The field of the disclosure is that of marker-based augmented reality systems.

More specifically, the disclosure relates to a method of detecting a fiducial marker displayed on a display device in a real world, as well as a method of managing such a fiducial marker displayed on a display device.

### BACKGROUND

Typically, a marker-based augmented reality system comprises a capturing module which captures an image from a camera, a tracking module (also referred to as "marker detector unit") which detects a fiducial marker (e.g. a 2D barcode marker) and deduces the pose (i.e. location and orientation) of the camera, and a rendering module which combines the original image and virtual components (i.e. 3D computer-generated objects) using the pose and then renders the augmented image on a screen.

Such a system is for example embedded in a portable device (optical or see-through device) or a personal computer, also comprising the camera and the screen. The portable device is for example a smartphone, a tablet, a head-mounted display (HMD), etc.

Marker-based augmented reality systems are numerous and target several application domains, such as gaming, marketing, medical imaging, etc.

The fiducial markers are positioned in the real world, in the field of view of the camera. They must be easily and reliably detectable under all circumstances. They often comprise a 2D black-and-white pattern composed of geometrically simple shapes such as squares or rectangles. In most systems, the fiducial markers are printed (e.g. on a label to be affixed on a real object, a floor or a wall). In some other systems, they are displayed on a display device, e.g. a TV set (not to be confused with the screen on which is rendered the augmented image).

Marker-based augmented reality systems are, by definition, highly dependent of the marker detector reliability. Once the marker detection is lost or instable, you lose the link between reality and virtual objects, and break the user immersion. This can be caused by any of the following limitations:
- the marker is out of the bounds of the camera field of view;
- the marker size is too small compared to the distance with the camera and the camera resolution is not enough;
- the marker size is too big (or the camera is now too close): it is bigger than the camera field of view;
- the marker inner contrast is too low compared to the rest of the camera captured image: for instance the marker is now in the shade while the major part of the picture is very bright;
- some instability in the detection may also appear when the camera is just in front of the marker.

Marker-based augmented reality systems are constrained by the marker attributes. All known marker-based augmented reality systems are using static markers, i.e. (printed or displayed) markers having attributes (including position and orientation) which are fixed (invariable). When using such a static marker, the marker detection efficiency of the system is limited by the initial setup choice of the marker attributes. Unfortunately, even if the marker attributes are carefully chosen, it is not always possible to prevent the above listed limitations where the marker detection is lost or instable.

Therefore there is a need to improve robustness of marker-based augmented reality systems.

### SUMMARY

A particular aspect of the present disclosure relates to a method of detecting a fiducial marker displayed on a display device in a real world, wherein a portable device, comprising a camera and a marker detector unit, performs:
- obtaining current attribute information representative of a current value of at least one modifiable attribute associated with said displayed fiducial marker;
- detecting said displayed fiducial marker in an image displayed on said display device, according to said current attribute information;
- computing pose information representative of a pose of said portable device with regard to the displayed fiducial marker in the real world, according to said current attribute information and said detected displayed fiducial marker; and
- obtaining first new attribute information representative of a first new value of said at least one modifiable attribute, said first new value depending on said computed pose information.

The general principle is that of using a "dynamic displayed marker" instead of a usual static (printed or displayed) marker. By "dynamic displayed marker" is meant a marker displayed on a display device and associated with at least one modifiable attribute.

With the proposed solution, when the dynamic displayed marker can be detected, and therefore when the current pose of the portable device can be computed, the value of the at least one modifiable attribute of the dynamic displayed marker is changed (from a current value to a first new value) taking into account the computed current pose. This allows an adaptive update of the dynamic displayed marker, which improves the marker detection efficiency, and therefore the robustness of the marker-based augmented reality system carrying out the proposed detection method.

In a particular implementation of the detection method, obtaining the first new attribute information comprises changing the current value of said at least one modifiable attribute to the first new value according to said computed pose information.

Thus, in the aforesaid adaptive update, the portable device carries out itself the change of current value of the at least one modifiable attribute.

In an alternative implementation of the detection method, obtaining the first new attribute information comprises:
- transmitting said computed pose information to allow a marker manager device to change the current value of said at least one modifiable attribute to the first new value according to said computed pose information; and
- receiving said first new attribute information representative of said first new value.

Thus, in this alternative implementation of the aforesaid adaptive update, the change of current value of the at least one modifiable attribute is not carried out by the portable device but instead by the marker manager device.

According to a particular feature of the detection method, if said displayed fiducial marker is not detected, the portable device performs:
- obtaining second new attribute information representative of a second new value of said at least one modifiable attribute; and
- detecting said displayed fiducial marker in an image displayed on said display device, according to said second new attribute information.

With the proposed solution, when the dynamic displayed marker can not be detected, and therefore when the current pose of the portable device can not be computed, the value of the at least one modifiable attribute of the dynamic displayed marker is also changed (from a current value to a second new value) but using guesses and/or system state history (i.e. previous value(s) of the at least one modifiable attribute and/or previous value(s) of the portable device's pose). This allows a corrective update of the dynamic displayed marker, which also improves the marker detection efficiency.

In a particular implementation of the detection method, obtaining the second new attribute information comprises changing the current value of said at least one modifiable attribute to the second new value.

Thus, in the aforesaid corrective update, the portable device carries out itself the change of current value of the at least one modifiable attribute.

In an alternative implementation of the detection method, obtaining the second new attribute information comprises:
- transmitting a failure information to allow a marker manager device to change the current value of said at least one modifiable attribute to the second new value; and
- receiving said second new attribute information representative of said second new value.

Thus, in this alternative implementation of the aforesaid corrective update, the change of current value of the at least one modifiable attribute is not carried out by the portable device but instead by the marker manager device.

Another aspect of the present disclosure relates to a method of managing at least one fiducial marker displayed on a display device in a real world, wherein a marker manager device performs:
- transmitting current attribute information, representative of a current value of at least one modifiable attribute associated with said displayed fiducial marker, to allow a portable device to detect said displayed fiducial marker in an image displayed on said display device;
- receiving pose information representative of a pose of said portable device with regard to the displayed fiducial marker in the real world;
- changing the current value of said at least one modifiable attribute to a first new value, according to said received pose information; and
- transmitting, to said portable device, first new attribute information representative of said first new value.

This corresponds to the aforesaid alternative implementation of the adaptive update, where the change of current value of the at least one modifiable attribute is carried out by the marker manager device.

According to a particular feature of the management method, if the marker manager device does not receive said pose information but failure information indicating a non-detection of said displayed fiducial marker, the marker manager device performs:
- changing the current value of said at least one modifiable attribute to a second new value; and
- transmitting second new attribute information representative of said second new value of said at least one modifiable attribute.

This corresponds to the aforesaid alternative implementation of the corrective update, where the change of current value of the at least one modifiable attribute is carried out by the marker manager device.

According to a particular feature of the management method, the marker manager device manages several fiducial markers displayed on said display device and each associated with a distinct portable device. When carrying out the step of changing the current value of said at least one modifiable attribute to the first or second new value, for a given of said displayed fiducial markers, the marker manager device handles at least one case of conflict between said given displayed fiducial marker and other ones of said displayed fiducial markers.

Thus several fiducial markers (each to be detected by a distinct user using a distinct portable device) can be displayed on the same display device.

According to a particular feature of the management method, said at least one case of conflict belongs to the group comprising:
- collision between at least two displayed fiducial markers; and
- occlusion between at least two displayed fiducial markers.

According to a particular feature of the detection method and/or the management method, said at least one modifiable attribute belongs to the group comprising:
- a position of the displayed fiducial marker in the displayed image;
- an orientation of the displayed fiducial marker in the displayed image;
- a size of the displayed fiducial marker in the displayed image;
- a color of the displayed fiducial marker in the displayed image;
- a luminance of the displayed fiducial marker in the displayed image;
- a contrast of the displayed fiducial marker in the displayed image;
- a pattern of the displayed fiducial marker in the displayed image.

One or several of these modifiable attributes can be used, depending on the implementations. This list is not exhautive. By increasing the number of modifiable attributes used, we improve the marker detection efficiency.

In a particular implementation of the detection method and/or the management method, the portable device is an optical see-through device or a video see-through device.

Another aspect of the present disclosure relates to a computer program product comprising program code instructions for implementing the above-mentioned method of detecting a fiducial marker (in any of its different embodiments) and/or a method of managing a fiducial marker (in any of its different embodiments), when said program is executed on a computer or a processor.

Another aspect of the present disclosure relates to a non-transitory computer-readable carrier medium, storing the aforesaid computer program product, i.e. a program which, when executed by a computer or a processor causes the computer or the processor to carry out the method of detecting a fiducial marker and/or the method of managing a fiducial marker.

Another aspect of the present disclosure relates to a portable device of a marker-based augmented reality system, said portable device comprising a camera and a marker detector unit and being configured to detect a fiducial marker displayed on a display device in a real world. Said portable device comprises:
- means for obtaining current attribute information representative of a current value of at least one modifiable attribute associated with said displayed fiducial marker;
- means for detecting said displayed fiducial marker in an image displayed on said display device, according to said current attribute information;
- means for computing pose information representative of a pose of said portable device with regard to the displayed fiducial marker in the real world, according to said current attribute information and said detected displayed fiducial marker; and
- means for obtaining new attribute information representative of a new value of said at least one modifiable attribute, said new value depending on said computed pose information.

Another aspect of the present disclosure relates to a portable device of a marker-based augmented reality system, said portable device comprising a camera and a marker detector unit and being configured to detect a fiducial marker displayed on a display device in a real world, the portable device comprising:
- a receiver configured to obtain current attribute information representative of a current value of at least one modifiable attribute associated with said displayed fiducial marker;
- a detector configured to detect the displayed fiducial marker in an image displayed on said display device, according to the current attribute information;
- a processor configured to compute pose information representative of a pose of said portable device with regard to the displayed fiducial marker in the real world, according to said current attribute information and said detected displayed fiducial marker; and
- a receiver or a processor configured to obtain new attribute information representative of a new value of said at least one modifiable attribute, said new value depending on said computed pose information.

Advantageously, the portable device comprises means for implementing the steps it performs in the method of detecting a fiducial marker as described above, in any of its various embodiments.

Another aspect of the present disclosure relates to a marker manager device of a marker-based augmented reality system, said marker manager device being configured to manage at least one fiducial marker displayed on a display device in a real world. Said marker manager device comprises:
- means for transmitting current attribute information, representative of a current value of at least one modifiable attribute associated with said displayed fiducial marker, to allow a portable device to detect said displayed fiducial marker in an image displayed on said display device;
- means for receiving pose information representative of a pose of said portable device with regard to the displayed fiducial marker in the real world; and
- means for changing the current value of said at least one modifiable attribute to a new value, according to said received pose information; and
- means for transmitting, to said portable device, first new attribute information representative of said first new value.

Another aspect of the present disclosure relates to a marker manager device of a marker-based augmented reality system, said marker manager device being configured to manage at least one fiducial marker displayed on a display device in a real world. Said marker manager device comprises:
- a transmitter configured to transmit current attribute information, representative of a current value of at least one modifiable attribute associated with said displayed fiducial marker, to allow a portable device to detect said displayed fiducial marker in an image displayed on said display device;
- a receiver configured to receive pose information representative of a pose of said portable device with regard to the displayed fiducial marker in the real world; and
- a processor configured to change the current value of said at least one modifiable attribute to a new value, according to said received pose information; and
- a transmitter configured to transmit, to said portable device, first new attribute information representative of said first new value.

Advantageously, the marker manager device comprises means for implementing the steps it performs in the method of managing a fiducial marker as described above, in any of its various embodiments.

### LIST OF FIGURES

Other features and advantages of embodiments shall appear from the following description, given by way of indicative and non-exhaustive examples and from the appended drawings, of which:
- Figures 1A and 1B provides a schematic illustration of an example of evolution in time of a dynamic marker position and scale, according to a particular embodiment of the invention;
- Figures 2A and 2B are flowchart of respectively a method of detecting a fiducial marker and the corresponding method of managing a fiducial marker, according to a first embodiment of the invention;
- Figures 3A and 3B are flowchart of respectively a method of detecting a fiducial marker and the corresponding method of managing a fiducial marker, according to a second embodiment of the invention;
- Figure 4 is a schematic illustration of a multiuser embodiment of the invention;
- Figure 5 shows the simplified structure of a portable device according to a particular embodiment of the invention; and
- Figure 6 shows the simplified structure of a marker manager device according to a particular embodiment of the invention.

### DESCRIPTION OF EMBODIMENTS

In all of the figures of the present document, similar elements and steps are designated by the same numerical reference sign.

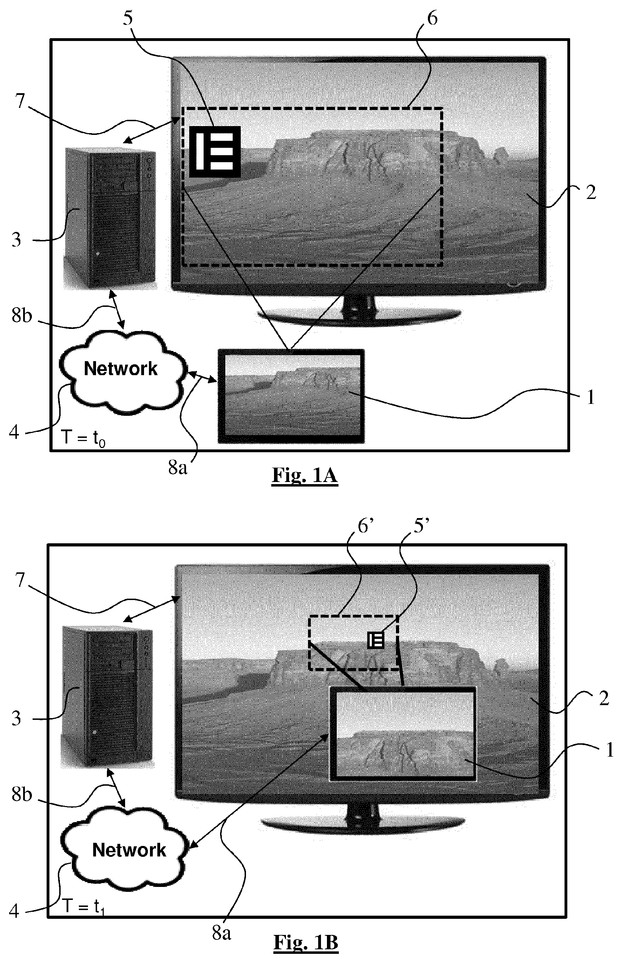

Referring now to **figures 1A and 1B****,** we present an example of marker-based augmented reality system in which it is possible to apply a particular embodiment of the disclosure.

This example of system comprises a marker manager device 3 (e.g. a personal computer), display device 2 (e.g. a TV set) and a portable device 1 (e.g. a smartphone, a tablet, a head-mounted display (HMD), or any optical or see-through device).

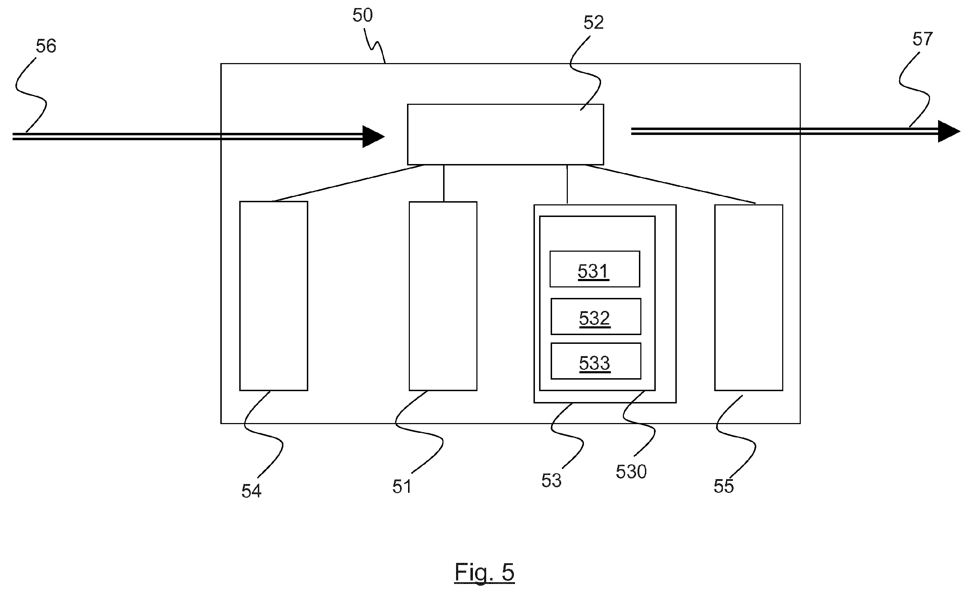

The marker manager device 3 manages at least one fiducial marker and the display thereof on the display device 2. The displayed fiducial marker (that visually appears on the display device 2) is referenced 5 in figure 1A and 5' in figure 1B.

In the example of figures 1A and 1B, the marker manager device 3 communicates with the display device 2 via a direct link 7. In an alternative embodiment (not shown), a link through a network is implemented.

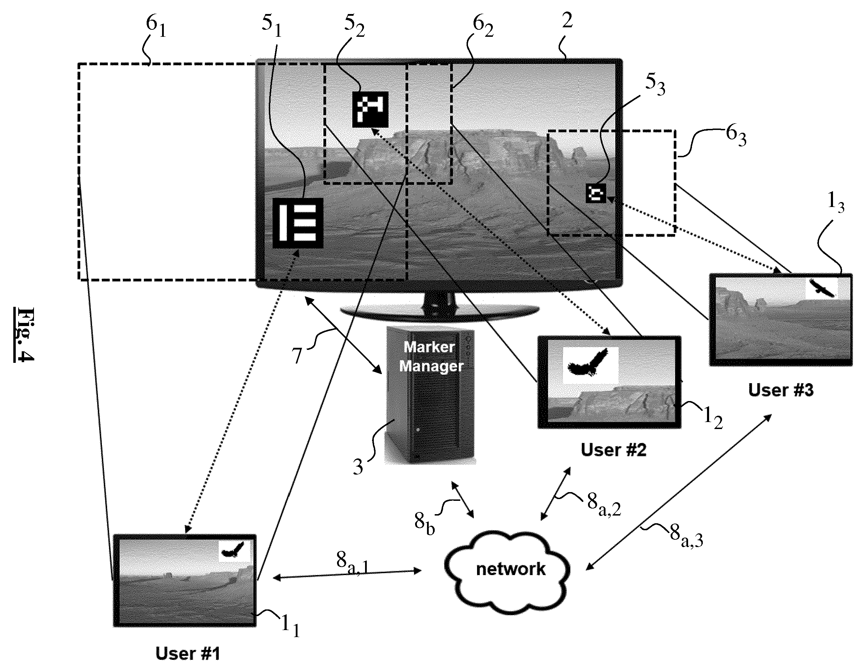

In the example of figures 1A and 1B, only one displayed fiducial marker 5, 5' is shown, corresponding to a single user embodiment. See figure 4 for a multiuser embodiment, with several markers displayed on the same display device.

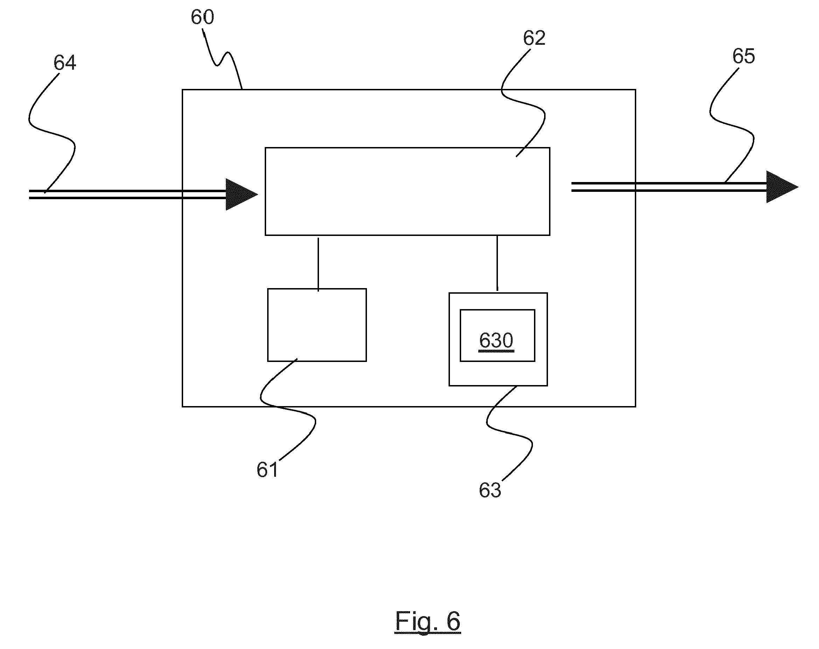

The portable device 1 comprises a camera, a screen, a capturing module, a tracking module (also referred to as "marker detector unit") and a rendering module. The capturing module captures an image from the camera. In the example of figures 1A and 1B, the captured image corresponds to a portion of the image displayed on the display device 2, and this portion is referenced 6 in figure 1A and 6' in figure 1B. The tracking module detects the displayed fiducial marker 5, 5' in the captured image and deduces the pose (i.e. location and orientation) of the camera. The rendering module combines the original captured image (or a real-world view, in case of an optical see-through portable device) with one or several virtual components (i.e. 3D computer-generated objects) using the pose, and then renders the augmented image on the screen.

In the example of figures 1A and 1B, the portable device 1 communicates with the marker manager device 3 via a link 8a, 8b passing though a network 4. In an alternative embodiment (not shown), a direct link (i.e. not through a network) is implemented.

Figures 1A and 1B illustrate the general principle of the proposed solution, i.e. the use of a dynamic displayed marker 5, 5' associated with at least one modifiable attribute. More precisely, figures 1A and 1B provide a schematic illustration of an example of evolution in time of two attributes of a dynamic marker, namely its position and its scale. In this example, between T=to (situation shown in figure 1A) and T=t₁ (situation shown in figure 1B), the user has moved the portable device 1, translating into the right while getting closer from the display device 2. The displayed marker (referenced 5 in figure 1A and 5' in figure 1B) has moved and scaled accordingly. If not, it would have not been visible anymore by the camera of the portable device 1.

Depending on the implementations, one or several attributes of the dynamic marker is (are) modifiable. A non-exhaustive list of modifiable attributes comprises:
- a position of the displayed fiducial marker in the displayed image (i.e. the image displayed on the display device 2);
- an orientation of the displayed fiducial marker in the displayed image;
- a size of the displayed fiducial marker in the displayed image;
- a color of the displayed fiducial marker in the displayed image;
- a luminance of the displayed fiducial marker in the displayed image;
- a contrast of the displayed fiducial marker in the displayed image;
- a pattern of the displayed fiducial marker in the displayed image;
- ...

By changing the value of one or several modifiable attributes (i.e. by doing a live modification of one or several of the marker attributes), the proposed solution allows to prevent at least some of the above listed limitations of the background solution (where the marker detection is lost or instable). In other words, the proposed solution allows for example one or all of the following actions to change the displayed dynamic marker:
- move the displayed marker (i.e. change its position) to make sure it is kept within the camera field of view;
- change the size of the displayed marker to adapt to the distance between the portable device 1 and the display device 2;
- change the color and/or the luminance and/or the contrast of the displayed marker, to adapt to the image captured by the camera of the portable device 1;
- change the orientation of the displayed marker, to avoid the displayed marker being shown directly in front of the detector (i.e. a case where the estimated pose can fluctuate between close values).

In the embodiments detailed below, those change actions may either be done pro-actively or as a fail-over mechanism. For both, we use a feedback loop between the marker manager device 3 and the portable device 1.

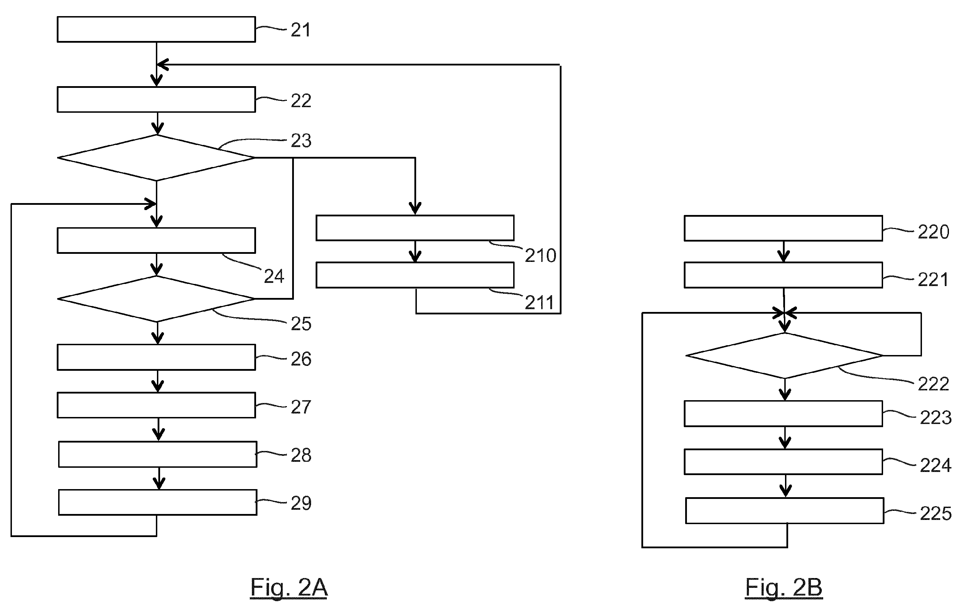

Referring now to **figures 2A and 2B**, we present a method of detecting a fiducial marker (carried out by the portable device 1; figure 2A) and the corresponding method of managing a fiducial marker (carried out by the marker manager device 3; figure 2B), according to a first embodiment of the present principles.

We detail now the flowchart of figure 2A.

In an initialisation step 21, the portable device 1 receives initialisation attribute information (sent by the marker manager device 3) representative of an initialisation value of each modifiable attribute associated with the displayed fiducial marker.

In a marker detection step 22, the portable device 1 tries to detect the displayed fiducial marker in the image displayed on the display device 2, according to the current attribute information (which at this stage are the initialisation attribute information).

If the displayed fiducial marker is not found in step 22 (i.e. in case of negative answer at test step 23), the portable device 1 carries out:
- a step 210, in which it transmits failure information to allow the marker manager device to change the current value (initialisation value in the present case) of one, several or all of the modifiable attributes to a new value and obtain new attribute information representative of the new value(s); and
- a step 211, in which it receives the new attribute information sent by the marker manager device 3, and goes back to the marker detection step 22 (at this stage, the current attribute information are the new attribute information sent by the marker manager device 3).

If the displayed fiducial marker is found in step 22 (i.e. in case of positive answer at the test step 23), the portable device 1 carries out a marker tracking step 24 in which, after a predetermined period of time, it tries again to detect the displayed fiducial marker in the image displayed on the display device 2, according to the current attribute information.

If the displayed fiducial marker is not found in step 24 (i.e. in case of negative answer at test step 25), the portable device 1 carries out the steps 210 and 211 (already described above) and goes back to the marker detection step 22.

If the displayed fiducial marker is found in step 24 (i.e. in case of positive answer at test step 25), the portable device 1 carries out:
- a step 26 in which it computes pose information representative of a pose of the portable device with regard to the displayed fiducial marker in the real world, according to the current attribute information and the detected displayed fiducial marker;
- a step 27 in which it transmits the computed pose information to allow the marker manager device to change the current value of one, several or all of the modifiable attributes to a new value according to the computed pose information and obtain new attribute information representative of the new value(s);
- a step 28 in which it combines an original captured image (or a real-world view, in case of an optical see-through portable device) with one or several virtual components using the computed pose information, and then renders the augmented image on the screen of the portable device 1;
- a step 29 in which it receives the new attribute information sent by the marker manager device 3, and goes back to the marker tracking step 24 (at this stage, the current attribute information are the new attribute information sent by the marker manager device 3).

We detail now the flowchart of figure 2B.

In an initialisation step 220, the marker manager device 3 transmits initialisation attribute information (see definition above) to the portable device 1.

In a step 221, the marker manager device 3 manages the display of the fiducial marker on the display device 2, according to the current attribute information (which at this stage are the initialisation attribute information).

In the test step 222, the marker manager device 3 detects if it has received a message sent by the portable device 1 and containing either failure information (see step 210 of figure 2A) or computed pose information (see step 27 of figure 2A). In case of negative answer at the test step 222, the marker manager device 3 remains at step 222. In case of positive answer at the test step 222, the marker manager device 3 carries out:
- a step 223 in which it changes the current value of one, several or all of the modifiable attributes to a new value and obtain new attribute information representative of the new value(s);
- a step 224 in which it transmits the new attribute information to the portable device 1;
- a step 225 in which it manages the display of the fiducial marker on the display device 2, according to the new attribute information; and goes back to the step 222.

As shown in figures 2A and 2B, two separate ways of improving the robustness of the marker detection are proposed: a corrective update of the marker attribute(s) after a failure (see steps 210-211 of figure 2A and steps 223-225 of figure 2B after receiving the failure information), or an adaptive (and pro-active) update of the marker attribute(s) to avoid - or at least diminish - detection fail rate (see steps 26-29 of figure 2A and steps 223-225 of figure 2B after receiving the computed pose information).

In case of corrective update until the first successful detection, the marker manager device 3 might adjust the displayed marker using any kind of best guesses of suitable attribute(s), since it is in "blind" mode. In a case of corrective update after the first successful detection, the marker manager device 3 might adjust the displayed marker taking into account the system state history (e.g. marker attributes and device pose).

In case of adaptive update (i.e. during the marker tracking), the marker manager device 3 might adjust the marker attribute(s) according to the movements of the portable device 1 relative to the display device 2.

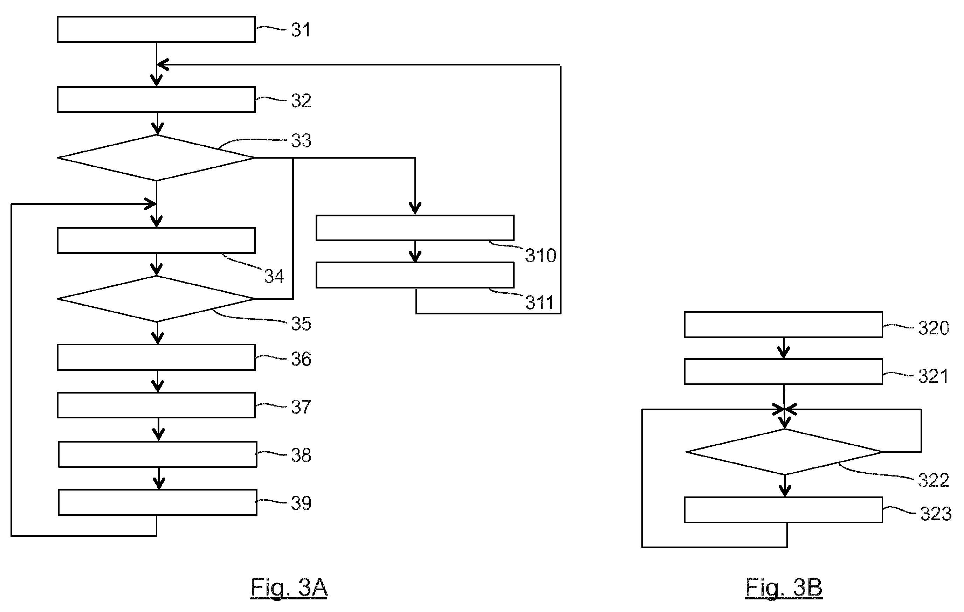

Referring now to **figures 3A and 3B**, we present a method of detecting a fiducial marker (carried out by the portable device 1; figure 3A) and the corresponding method of managing a fiducial marker (carried out by the marker manager device 3; figure 3B), according to a second embodiment of the present principles.

The difference with the first embodiment shown in figures 2A and 2B and discussed above, is that the portable device 1 has the initial knowledge of the initialisation attribute information and carries out the changes of the current value of one, several or all of the modifiable attributes to a new value (and therefore obtain new attribute information representative of the new value(s)).

We detail now the flowchart of figure 3A.

In an initialisation step 31, the portable device 1 transmits initialisation attribute information (see definition above) to the marker manager device 3.

Marker detection step 32 is identical to the marker detection step 22 of figure 2A.

If the displayed fiducial marker is not found in step 32 (i.e. in case of negative answer at test step 33), the portable device 1 carries out:
- a step 310, in which it changes the current value (initialisation value in the present case) of one, several or all of the modifiable attributes to a new value and obtain new attribute information representative of the new value(s); and
- a step 311, in which it transmits the new attribute information to the marker manager device 3, and goes back to the marker detection step 32.

If the displayed fiducial marker is found in step 32 (i.e. in case of positive answer at the test step 33), the portable device 1 carries out a marker tracking step 34 identical to the marker tracking step 24 of figure 2A.

If the displayed fiducial marker is not found in step 34 (i.e. in case of negative answer at test step 35), the portable device 1 carries out the steps 310 and 311 and goes back to the marker detection step 32.

If the displayed fiducial marker is found in step 34 (i.e. in case of positive answer at test step 35), the portable device 1 carries out:
- a step 36 identical to the step 26 of figure 2A (computing of the pose information);
- a step 37 in which it changes the current value of one, several or all of the modifiable attributes to a new value according to the computed pose information and obtain new attribute information representative of the new value(s);
- a step 38 identical to the step 28 of figure 2A (rendering of the augmented image on the screen of the portable device 1);
- a step 39 in which it transmits the new attribute information to the marker manager device 3, and goes back to the marker tracking step 34.

We detail now the flowchart of figure 3B.

In an initialisation step 320, the marker manager device 3 receives initialisation attribute information (see definition above) sent by the portable device 1.

Step 321 is identical to the step 221 of figure 2A (managing the display of the fiducial marker on the display device 2, according to the current attribute information).

In the test step 322, the marker manager device 3 detects if it has received a message sent by the portable device 1 and containing new attribute information (see steps 311 and 39 of figure 3A). In case of negative answer, the marker manager device 3 remains at step 322. In case of positive answer at the test step 322, the marker manager device 3 carries out a step 323 in which it manages the display of the fiducial marker on the display device 2, according to the new attribute information; and goes back to the step 322.

**Figure 4** is a schematic illustration of a multiuser embodiment of the invention. The marker manager device 3 manages the display of several fiducial markers 5₁, 5₂, 5₃... on the display device 2. Each of the displayed fiducial marker is associated with a distinct portable device 1₁, 1₂, 1₃ ... In this example, each portable device communicates with the marker manager device 3 via a link (8a₁, 8b), (8a₂, 8₂), (8a₃, 8b)... passing though the network 4.

When carrying out the step of changing the current value of one, several or all of the modifiable attributes to a new value (see step 223 of figure 2B), for a given of the displayed fiducial markers (e.g. 5₁), the marker manager device 3 handles one or several cases of conflict between the given displayed fiducial marker (e.g. 5₁) and other ones of the displayed fiducial markers (e.g. 5₂, 5₃...). For example, the following cases of conflict are handled: collision between at least two displayed fiducial markers; and occlusion between at least two displayed fiducial markers.

**Figure 5** shows the simplified structure of the portable device 1 according to a particular embodiment of the present principles.

The portable device 1 comprises a non-volatile memory 53 (e.g. a read-only memory (ROM) or a hard disk), a volatile memory 51 (e.g. a random access memory or RAM), a processor 52, a camera 54 and a screen 55.

The non-volatile memory 53 is a non-transitory computer-readable carrier medium. It stores executable program code instructions 530, which are executed by the processor 52 in order to enable implementation of the method of detecting a fiducial marker described above.

Upon initialization, the program code instructions 530 are transferred from the non-volatile memory 53 to the volatile memory 51 so as to be executed by the processor 52. The volatile memory 51 likewise includes registers for storing the variables and parameters required for this execution.

In the first embodiment illustrated in figure 2A, the inputs 56 comprise initialisation attribute information and new attribute information sent by the marker manager device 3, and the outputs 57 comprise failure information and computed pose information sent to the marker manager device 3.

In the second embodiment illustrated in figure 3A, the outputs 57 comprise initialisation attribute information and new attribute information sent to the marker manager device 3.

In a particular implementation, some parts (531, 532 and 533) of the program code instructions 530, when executed by the processor 52, enable implementation of the capturing module, the tracking module (also referred to as "marker detector unit") and the rendering module discussed above. In an alternative implementation, these modules are hardware modules, including electronic circuitry configured to perform their respective functions. Each of these units may also be implemented in a combination of hardware and software.

**Figure 6** shows the simplified structure of the marker manager device 3 according to a particular embodiment of the present principles.

The marker manager device 3 comprises a non-volatile memory 63 (e.g. a read-only memory (ROM) or a hard disk), a volatile memory 61 (e.g. a random access memory or RAM) and a processor 62.

The non-volatile memory 63 is a non-transitory computer-readable carrier medium. It stores executable program code instructions 630, which are executed by the processor 62 in order to enable implementation of the method of managing a fiducial marker described above.

Upon initialization, the program code instructions 630 are transferred from the non-volatile memory 63 to the volatile memory 61 so as to be executed by the processor 62. The volatile memory 61 likewise includes registers for storing the variables and parameters required for this execution.

In the first embodiment illustrated in figure 2B, the outputs 65 comprise initialisation attribute information and new attribute information sent to the portable device 1, and the inputs 64 comprise failure information and computed pose information sent by the portable device 1.

In the second embodiment illustrated in figure 3B, the inputs 64 comprise initialisation attribute information and new attribute information sent by the portable device 1.

Different implementations of the portable device 1 and the marker manager device 3 can be used. Indeed all the steps of the method of detecting a fiducial marker (carried out by the portable device 1) and all the steps of the method of managing a fiducial marker (carried out by the marker manager device 3) can be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure of the portable device 1 and the marker manager device 3 is not limited to a purely software-based implementation, in the form of computer program instructions, but that it can also be implemented in hardware form or any form combining a hardware portion and a software portion.

## Claims

1. Method of detecting a fiducial marker displayed on a display device (2) in a real world, the method being **characterized in that** a portable device (1), comprising a camera and a marker detector unit, performs:
- obtaining (21, 211) current attribute information representative of a current value of at least one modifiable attribute associated with said displayed fiducial marker (5);
- detecting (24; 34) said displayed fiducial marker in an image displayed on said display device, according to said current attribute information;
- computing (26; 36) pose information representative of a pose of said portable device with regard to the displayed fiducial marker in the real world, according to said current attribute information and said detected displayed fiducial marker; and
- obtaining (27, 29; 37) first new attribute information representative of a first new value of said at least one modifiable attribute, said first new value depending on said computed pose information.

2. Method according to claim 1, **characterized in that** obtaining the first new attribute information comprises changing (37) the current value of said at least one modifiable attribute to the first new value according to said computed pose information.

3. Method according to claim 1, **characterized in that** obtaining the first new attribute information comprises:
- transmitting (27) said computed pose information to allow a marker manager device (3) to change the current value of said at least one modifiable attribute to the first new value according to said computed pose information; and
- receiving (29) said first new attribute information representative of said first new value.

4. Method according to any one of the claims 1 to 3, **characterized in that**, if said displayed fiducial marker is not detected, the portable device performs:
- obtaining (210, 211; 310) second new attribute information representative of a second new value of said at least one modifiable attribute; and
- detecting (22; 32) said displayed fiducial marker in an image displayed on said display device, according to said second new attribute information.

5. Method according to claim 4, **characterized in that** obtaining the second new attribute information comprises changing (310) the current value of said at least one modifiable attribute to the second new value.

6. Method according to claim 4, **characterized in that** obtaining the second new attribute information comprises:
- transmitting (210) a failure information to allow a marker manager device to change the current value of said at least one modifiable attribute to the second new value; and
- receiving (211) said second new attribute information representative of said second new value.

7. Method of managing at least one fiducial marker displayed on a display device (2) in a real world, the method being **characterized in that** a marker manager device (3) performs:
- transmitting 220) current attribute information, representative of a current value of at least one modifiable attribute associated with said displayed fiducial marker (5), to allow a portable device (1) to detect said displayed fiducial marker in an image displayed on said display device;
- receiving (222) pose information representative of a pose of said portable device with regard to the displayed fiducial marker in the real world;
- changing (223) the current value of said at least one modifiable attribute to a first new value, according to said received pose information; and
- transmitting (224), to said portable device, first new attribute information representative of said first new value.

8. Method according to claim 7, **characterized in that**, if the marker manager device does not receive said pose information but failure information indicating a non-detection of said displayed fiducial marker, the marker manager device performs:
- changing (223) the current value of said at least one modifiable attribute to a second new value; and
- transmitting (224) second new attribute information representative of said second new value of said at least one modifiable attribute.

9. Method according to any one of the claims 7 to 8, **characterized in that** the marker manager device (3) manages several fiducial markers (5₁-5₃) displayed on said display device (2) and each associated with a distinct portable device (1₁-1₃), and **in that**, when carrying out the step (223) of changing the current value of said at least one modifiable attribute to the first or second new value, for a given of said displayed fiducial markers, the marker manager device handles at least one case of conflict between said given displayed fiducial marker and other ones of said displayed fiducial markers.

10. Method according to claim 9, **characterized in that** said at least one case of conflict belongs to the group comprising:
- collision between at least two displayed fiducial markers; and
- occlusion between at least two displayed fiducial markers.

11. Method according to any one of the claims 1 to 10, **characterized in that** said at least one modifiable attribute belongs to the group comprising:
- a position of the displayed fiducial marker in the displayed image;
- an orientation of the displayed fiducial marker in the displayed image;
- a size of the displayed fiducial marker in the displayed image;
- a color of the displayed fiducial marker in the displayed image;
- a luminance of the displayed fiducial marker in the displayed image;
- a contrast of the displayed fiducial marker in the displayed image;
- a pattern of the displayed fiducial marker in the displayed image.

12. Method according to any one of the claims 1 to 11, **characterized in that** the portable device (1) is an optical see-through device or a video see-through device.

13. A non-transitory computer-readable carrier medium (53) storing program code instructions for implementing a method according to at least one of the claims 1 to 12, when said program is executed on a computer or a processor (52).

14. Portable device (1) of a marker-based augmented reality system, said portable device comprising a camera and a marker detector unit and being configured to detect a fiducial marker displayed on a display device (2) in a real world, **characterized in that** said portable device comprises:
- means (51-53) for obtaining current attribute information representative of a current value of at least one modifiable attribute associated with said displayed fiducial marker;
- means (51-53) for detecting said displayed fiducial marker in an image displayed on said display device, according to said current attribute information;
- means (51-53) for computing pose information representative of a pose of said portable device with regard to the displayed fiducial marker in the real world, according to said current attribute information and said detected displayed fiducial marker; and
- means (51-53) for obtaining new attribute information representative of a new value of said at least one modifiable attribute, said new value depending on said computed pose information.

15. Marker manager device (3) of a marker-based augmented reality system, said marker manager device being configured to manage at least one fiducial marker displayed on a display device (2) in a real world, **characterized in that** said marker manager device comprises:
- means (61-63) for transmitting current attribute information, representative of a current value of at least one modifiable attribute associated with said displayed fiducial marker, to allow a portable device to detect said displayed fiducial marker in an image displayed on said display device;
- means (61-63) for receiving pose information representative of a pose of said portable device with regard to the displayed fiducial marker in the real world; and
- means (61-63) for changing the current value of said at least one modifiable attribute to a new value, according to said received pose information; and
- means (61-63) for transmitting, to said portable device, first new attribute information representative of said first new value.
